# EUROPEAN PATENT APPLICATION

(11) **EP 1 688 645 A1**
(43) Date of publication of application: **09.08.2006**
(21) Application number: 06101191.2
(22) Date of filing: 02.02.2006
(51) Int. Cl.: F16H 29/04

(54) **Adjustable velocity ratio mechanical transmission**

(30) Priority: 03.02.2005 IT TV20050018
(71) Applicant: Girotto, Adriano, 31027 Spresiano (IT)
(72) Inventor: Girotto, Adriano, 31027 Spresiano (IT)
(74) Representative: Agostini, Agostino

(57) **Abstract**

Mechanical transmission (100; 200; 300; 500; 560; 600; 660; 800) with a variable transmission ratio between an input rotor (116; 210; 410; 570; 672; 810) and an output rotor (113; 240; 440; 572; 670; 840) coupled together by means of a coupling free wheel (116, 111, 115; 230; 290; 830) for transmission of the rotary movement, characterized in that it comprises between the input rotor and the output rotor one or more free wheels (111, 112, 113, 114, 115; 231; 291, 292, 293; 831) arranged in cascade with the coupling free wheel and able to transmit to one of the two rotors the rotary movement supplied from the coupling free wheel.

## Description

The invention relates to a mechanical transmission, the transmission ratio of which may be modified in a continuous manner.

As is known, most motor vehicles have a speed-changing unit which manages the variation of the transmission ratio between engine and wheels. Many manufacturers have introduced onto the market vehicles equipped with transmissions where the speed ratio is continuously varied. This is due to the possibility of improving the number of kilometres travelled and reducing polluting emissions, since the engine may be kept always at an optimum speed.

DE 196 34 878 describes (see diagram shown in Fig. 18) a variator 1000 provided with an output pulley (OUT) arranged rotatably on an input shaft (IN) by means of a support and with a (single) free wheel (FW), the contact components of which, in particular rollers or contact bodies, are arranged on inclined surfaces between two engaging guides directed towards each other and associated with the output pulley and input shaft respectively (hereinbelow "free wheel" or "sprag clutch" is understood as meaning the mechanism defined as such in the "McGraw-Hill Dictionary of Scientific and Technical Terms", Copyright© 1994, published by McGraw Hill Inc.). Reference is made to a positioning device with rotating rings for radially displacing the axes of rotation of the output pulley and the input shaft with respect to each other. In a zero position of the positioning device, the axes of rotation coincide. By means of the free wheel FW a friction coupling is established between the IN shaft and the OUT pulley which rotate with the same number of revolutions. By arranging the axes of the input shaft and the output pulley in an offset position parallel with each other the number of revolutions of the output pulley becomes greater than that of the input shaft. This variator has a very low theoretical transmission ratio, at the most 1.5, which is obtained with the maximum axial displacement between pulley and shaft. In reality, however, this maximum can never be reached, on account of parasitic vibrations which are generated either when the transmission rollers are at the start of the corresponding inclined surface or when the contact bodies are fully inclined It should be remembered that an acceptable variation of the transmission ratio for a motor vehicle is at least 1:5.

Another variator which uses free wheels is described in EP 1,028,271. Here an input shaft engages with rotating bodies arranged in a radial direction with respect to the shaft. Said rotating bodies may be displaced eccentrically with respect to the shaft so that each of them is displaced through a same angle with respect to the input shaft. The rotational movement of the rotating bodies, which varies with said angle, is then "rectified" and applied to the output shaft by means of free wheels coupled to each rotating body. The free wheels all act on a same component, coupled to the output shaft, and transfer power, working in parallel and in a discontinuous manner.

A common problem associated with variators of this type is also the unidirectional transmission of the movement between input and output of the variator, owing to the unidirectional nature of the free wheels. If the output shaft of the variator is forced to rotate at a faster speed than that set by the variator itself, it does not encounter any resistance and rotates in an uncontrolled manner (rotational runaway). If this were to be permitted, it would result, for example, in a vehicles travelling down a hill without braking by the engine. Finally, these variators allow a variation in the number of output revolutions only within a range from zero to a certain (low) number, without the possibility of reversing the direction of rotation of the output shaft. Some solutions, as in EP 1,369,624 and WO 98/34051, adopt an epicyclic system, but the complexity of the variator with and without the epicyclic system is considerable.

The object of the present invention is to provide a mechanical transmission (or a speed variator) with a variable transmission ratio which does not have the drawbacks described above and also has a simple and reliable design.

This object is achieved by a mechanical transmission with a variable transmission ratio between an input rotor and an output rotor coupled together by means of a coupling freewheel for transmission of the rotary movement, characterized in that it comprises between the input rotor and the output rotor one or more free wheels arranged in cascade with the coupling free wheel and able to transmit to one of the two rotors the rotary movement supplied by the coupling free wheel. "Rotor" is understood as meaning clearly any rotating mechanical part able to transmit, receive or transfer rotary movement, for example a shaft, a gear wheel, a universal joint, a sleeve coupling, a cylindrical flange, an annular guide, etc.

A diagram 2000 of the invention, which summarises the inventive idea, is shown in Fig. 19. Two (sets of) free wheels (shown in broken lines) are connected in cascade, alternately or simultaneously, to the coupling free wheel FW (shown in continuous lines). Depending on the connection points for the free wheels (or sets of free wheels), i.e. depending on the configuration of the cascade of free wheels, it is possible to obtain a higher transmission ratio between a input rotor IN and an output rotor OUT, the formation of a kinematic loop, or both.

The characteristic features and the advantages arising from the invention will emerge more clearly from the following description of examples of embodiments of the invention, shown in the accompanying drawings, in which:
Fig. 1 shows a vertical section along a plane of symmetry of a transmission according to the invention;
Fig. 2 shows a cross-sectioned front view of the transmission according to Fig. 1 along the plane III-III;
Figs. 3, 4, 5 and 6 show by way of comparison, respectively, cross-sectional views along the planes II-II, III-III, IV-IV and V-V of Fig. 2;
Fig. 7 shows a cross-sectional view as in Fig. 2 for a first configuration of the transmission according to Fig. 1;
Fig. 8 shows a cross-sectional view as in Fig. 2 for a second configuration of the transmission according to Fig. 1;
Fig. 9 shows a vertically sectioned view, along a plane of symmetry, of a first embodiment of a first variant of the transmission;
Fig. 10 shows a vertically sectioned view of a second embodiment of the variant according to Fig. 9;
Fig. 11 shows a table relating to the transmission of Fig. 9;
Fig. 12 shows a vertically sectioned and partially schematic view of a first embodiment of a second variant of a transmission according to the invention;
Fig. 13 shows a diagram of another transmission according to the invention;
Fig. 14 shows a table relating to the transmission of Fig 13;
Fig. 15 shows a diagram of another transmission according to the invention;
Fig. 16 shows a device for setting the transmission ratio in a transmission according to the invention;
Fig. 17 shows a graph relating to the performance of a transmission according to the invention;
Fig. 18 shows a diagram of a known variator;
Fig. 19 shows a simplified diagram of the characteristic features of the invention.

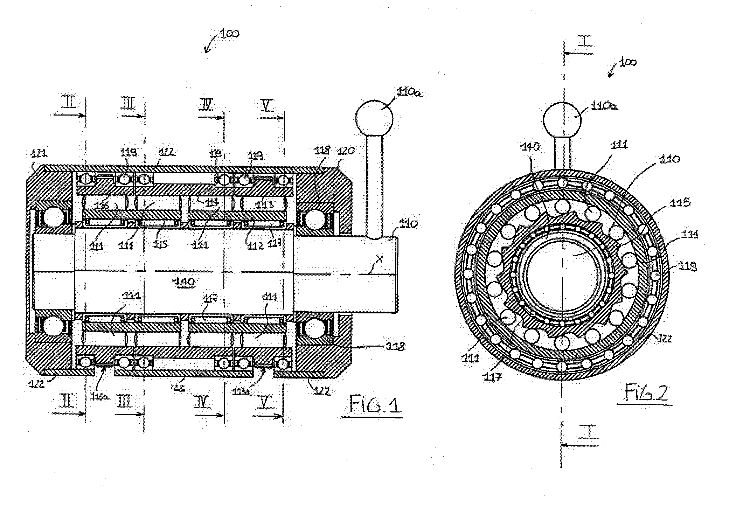

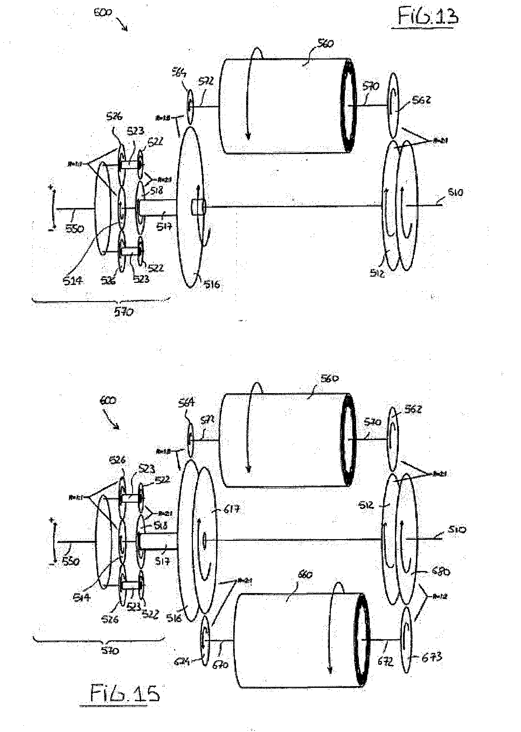

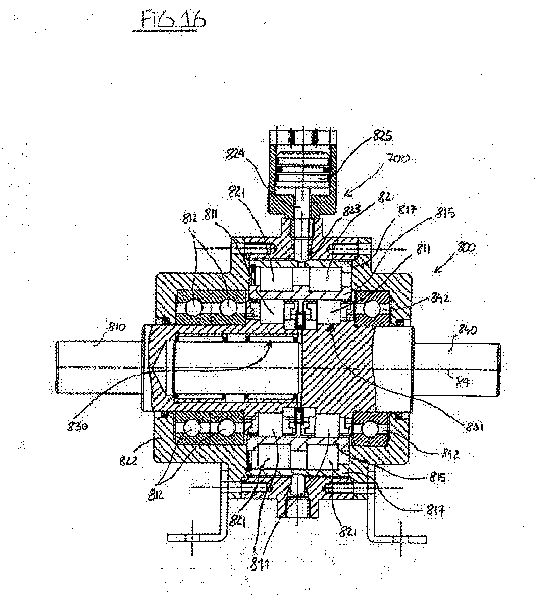

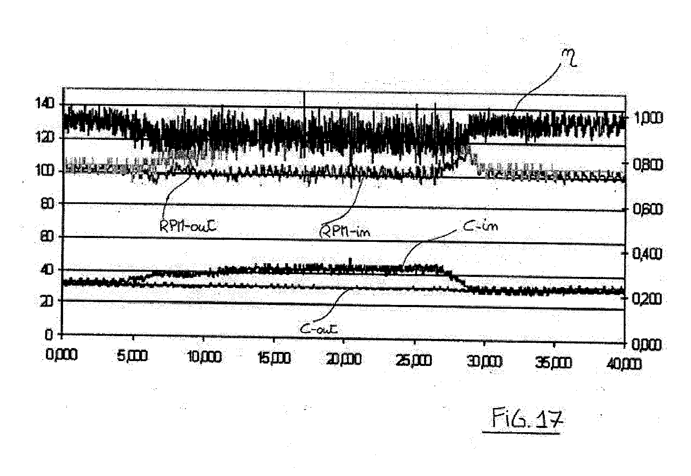

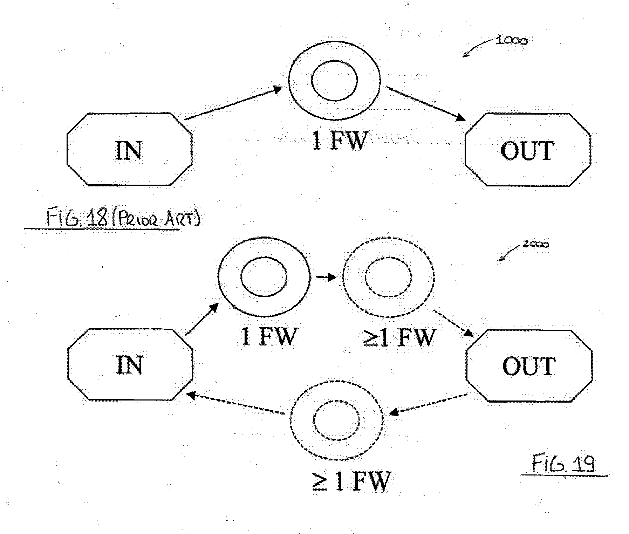

With reference to Figures 1 to 9 a transmission 100 comprises a central shaft 110 with an axis X supported rotatably by two flanges 120 and 121 via ball bearings 118. The flanges 120 and 121 are fixed by means of screws or some other suitable system to an outer circular jacket 122. Three coupling sleeves 113, 114 and 116 are mounted coaxially and rotatably inside the jacket 122 by means of bearings 119.

Coupling sleeves 112 and 115 provided with outer teeth 112a, 112b, 115a, 115b having inclined surfaces are mounted by means of bearings 117 (only some of which are shown) on the shaft 110 in a rotatable and eccentric manner with respect to the axis X (it can be noted in fact that a central portion 140 of the shaft 110 has an asymmetrical cross-section with respect to the axis X). As can be seen in Figures 2 to 8, each sleeve 112, 115 has teeth 112a, 115a with surfaces inclined in the anti-clockwise direction, arranged alongside teeth 112b, 115b with surfaces inclined in the clockwise direction.

Each sleeve 113, 114 and 116 has internally, mounted in a known manner, rollers 111 (only some of which are numbered for the sake of clarity) which come into contact with the teeth of the corresponding inner sleeves 112, 115, connecting in a sequential manner the inner sleeves with the outer sleeves. As in known free wheels, springs (not shown) are provided, these springs pushing the rollers 111 towards the top of the inclined surface on which they rest. With a lever 110a it is possible to cause rotation of the shaft 110 through 180° about the axis X. This rotation has the effect of axially displacing the sleeves 112 and 115 with respect to the axis X.

The transmission 100 operates in the manner described below, with reference to two different configurations thereof a) and b) taken as examples.

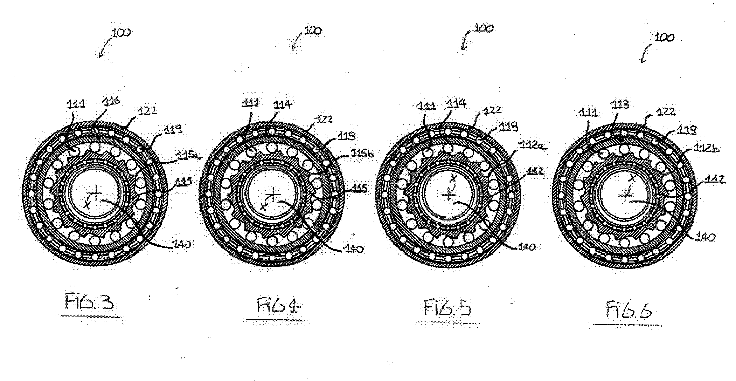

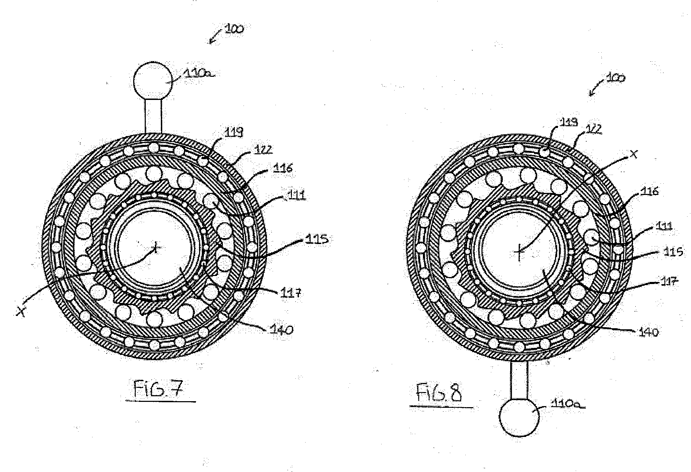

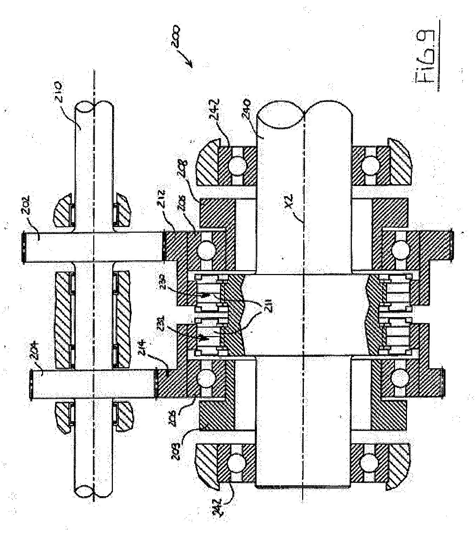

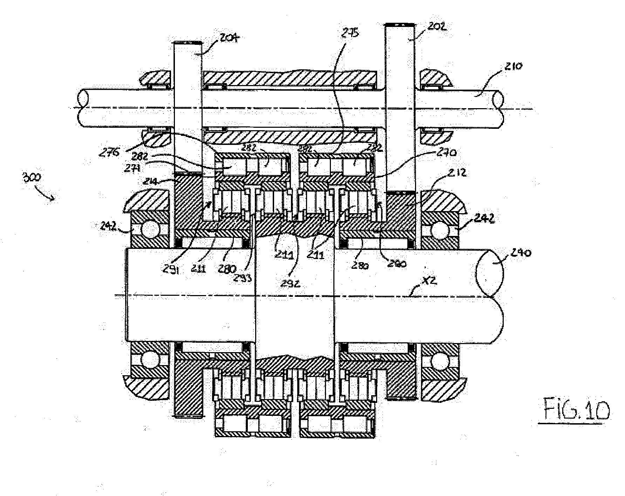

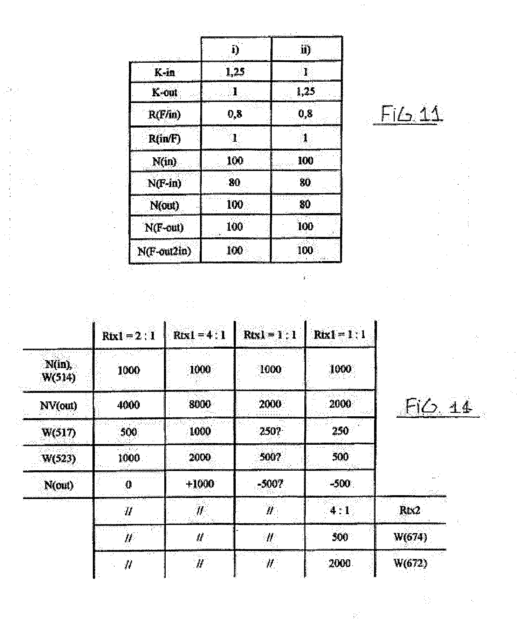

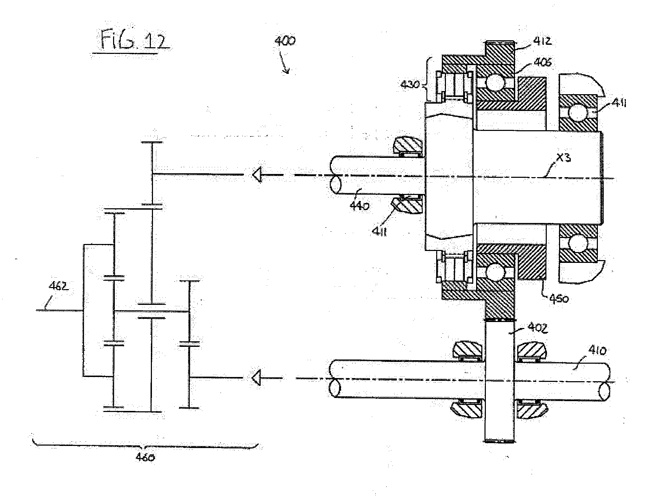

Configuration a): the sleeves 112 and 115 (Fig. 7) are situated perfectly coaxial with the sleeves 113, 114 and 116. The teeth 115a, 115b and 112a, 112b rotate about the central axis X, keeping constant their radial distance from the internal surface of the sleeves 113, 114 and 116. In this way, the rollers 111, which are in contact both with the teeth 115a, 115b, 112a, 112b and with the internal surface of the sleeves 113, 114 and 116, ensure a rotation in the same direction both for the inner sleeves 112, 115 and for the outer sleeves 113, 114 and 116 (as occurs normally in an ordinary free wheel). Adopting the operating principle of free wheels, the transmission 100 therefore transmits in a constant manner the rotary movement along the succession (or kinematic cascade) of sleeves 116 -> 115 -> 114 -> 112 -> 113, shown individually in Figs 3, 4, 5 and 6.

In particular, by imparting from the outside a rotary movement to the sleeve 116, via the teeth 116a, the movement is transmitted, via the rollers 111 and the teeth 115a, to the sleeve 115 which in turn causes rotation, via the teeth 115b and the rollers 111, of the sleeve 114 which in turn causes rotation of the sleeve 112 which finally in turn transmits the movement to the sleeve 113, the latter being provided with teeth 113a able to transmit the movement to the outside of the transmission 100. It should be noted, as with every known free wheel, the movement may be transmitted in a single direction by the outer rotating sleeve to the inner sleeve or vice versa. Moreover it is clear that the free wheels designed with an outer sleeve and an inner sleeve, coupled with the rollers 111, are engaged in pairs in cascade via a common coupling sleeve (or rotor), the latter forming at the same time the driven rotating component of the free wheel upstream and the driving rotating component of the free wheel downstream. The advantage of a common rotor is that it simplifies greatly the structure of the transmission.

Configuration b): the shaft 110 (Fig. 8) has been rotated, via the lever 110a, through 180° with respect to the position assumed in the configuration a). Now the sleeves 112 and 115 are situated off-centre (offset) and are not coaxial with the axis X of the sleeves 113, 114 and 116.

The radial distance of the teeth 115a, 115b and 112a and 112b from the inner surface of the sleeves 113, 114 and 116 varies cyclically during the execution of a complete revolution in the anti-clockwise direction by the sleeves 112, 115. More precisely, during the execution of a first half-turn a single roller 111 is compressed gradually by the corresponding tooth towards the inner surface of the sleeve (this is applicable obviously for all the outer sleeves 113,114 and 116 or generally for all the stages which form the transmission 100).

The compression of a roller 111 forces it to roll along the inclined surface of the corresponding tooth. This rolling movement, owing to the pressure which the tooth exerts on the roller 111, is transmitted also to the outer sleeve, causing an increase in its relative speed with respect to the toothed inner sleeve. During the second half-turn a greater radial distance exists between the teeth 112a, 112b, 115a, 115b and the sleeve opposite them. Therefore a roller 111, pushed by the special springs commonly present on the free wheels and not shown in the drawings, tends to rise up towards the tip of the corresponding inclined surface. In this condition the roller 111, as occurs in normal idly rotating free wheels, does not transmit the rolling movement to the sleeve since it is not subject to pressure by the teeth 112a, 112b, 115a,115b.

As explained, the inner sleeves 112, 115 and outer teeth 113, 114, 116 are mounted in a sequential manner and this ensures that the rotary movement increases in a gradual manner passing from one pair of sleeves to the next one. This means that, if between one pair of sleeves (for example the sleeves 116 and 115), which forms a stage of the transmission 100, the angular velocity increases by a factor for example of 1.3, a third sleeve (for example the sleeve 114) will have an angular velocity equal to (1.3)*(1.3). For each pair of sleeves, therefore, the angular velocity transmitted is multiplied by the transmission ratio of the free wheel downstream. It is thus possible to obtain a desired transmission ratio by arranging a suitable number of stages in cascade.

Obviously, if the shaft 110, by means of the lever 110a, is positioned at points in between those described, the sleeves 115 and 115 are positioned off-centre with respect to the sleeves 116, 114 and 113 in a manner proportional to the angular position of the said shaft 110, with a consequent proportional variation of the speed of rotation output on the sleeve 113. It should be noted that the input/output connecting teeth of the transmission 100 form an integral part of the transmission 100, such that additional components are not required for engagement of the transmission 100 with other mechanical parts.

The eccentric position of outer sleeves 113, 114, 116 and inner sleeves 112, 115 can be obtained, by way of a variant of the invention, by also arranging off-centre the outer sleeves with respect to the inner sleeves, practically in the reverse manner to that described and illustrated in the drawings. An advantageous system is described below.

Moreover, the inclined surfaces may also be formed directly on the inner surface of the outer sleeves. It is also possible to use, as in the commercially available free wheels, contact bodies and the transmission ratio may be defined by determining in a stable manner the eccentricity in the free wheels. In place of the sleeves it is possible to use equivalent annular parts.

All of this is also applicable to all the subsequent variants contained in this description.

Figures 9 and 10 illustrate two embodiments 200, 300 of a variant of the transmission in which rotational runaway of an output shaft 240 and 340, with an axis indicated by X2, is avoided in each case.

In the transmission 200 an input shaft 210 comprises two gear wheels 202, 204, the first having a diameter slightly greater than the other one and both engaging, respectively, on two identical toothed flanges 212, 214 mounted rotatably on the transmission 200 by means of bearings 206. These bearings 206 are in turn mounted on two collars 208, 209 coaxial with the shaft 240 and movable independently of each other perpendicularly with respect to the axis X2 so as to axially offset the collars 208, 209 with respect to the axis X2, while keeping them however always meshed with the wheels 202, 204 (the teeth are sufficiently deep to allow such a movement). Other systems for coupling together the input shaft and the flanges, for example belts or chains, may be used; this is also applicable to all the other variants.

The flanges 212, 214 form respectively the outer component of two free wheels 230, 231 coupled by means of rollers 211 to the output shaft 240, which is supported by bearings 242. The constructional design of the free wheels 230, 231, although subject to many variations, is identical to that of the transmission 100, and is not described further. The two free wheels 230, 231 are designed so that the first one is able to receive the rotary movement from the flange 212 and transmit it to the shaft 240, while the second one is able to receive the rotary movement from the shaft 240 and transmit it to the flange 214.

With reference to the Table shown in Fig. 11, to which the comments made below refer, operation of the transmission 200 is described. It should be noted that, in order to simplify the presentation of the numerical data in the table, the proportions of the transmission 200 are not reproduced exactly, the underlying principle being described obviously remaining valid.
K-in = transmission ratio of a free wheel from a gear wheel to the output shaft;
K-out = transmission ratio of a free wheel from the output shaft to a gear wheel;
R(F/in) = transmission ratio from the input shaft to a toothed flange;
R(in/F) = transmission ratio from a toothed flange to the input shaft;
N(m) = number of revolutions of the input shaft;
N(out) = number of revolutions of the output shaft;
N(F-in) = number of revolutions of the flange which transfers power to the output shaft;
N(F-out) = number of revolutions of the flange which recovers power from the output shaft;
N(F-out2in) = number of revolutions on the input shaft received by the flange which recovers power from the output shaft.

In case i) of the Table an operating condition of 100 revolutions per minute (rpm) is assumed for the input shaft 210. These revolutions become 80 rpm on the flange 214 and are transferred and increased (100 rpm) to the shaft 240 by means of the free wheel 231, which is set for a non-unitary transmission ratio (1.25). The shaft 240, by means of the free wheel 230 set for a unitary transmission ratio, fully transfers its 100 rpm to the flange 212, which returns 100 rpm back to the input shaft 210 owing to the transmission ratio R(in/F) of 1:1. In this configuration it can be seen that, even if an external torque were to be imparted to the shaft 240, tending to accelerate it above 100 rpm, this torque would encounter a resistance in the kinematic loop formed by the cascade: input shaft 240 -> free wheel 231 - > flange 214 -> input shaft 210 -> flange 212 -> free wheel 230 -> output shaft 240. Once in equilibrium, the kinematic loop does not allow its components a different rpm condition and instead is able to withstand an rpm condition for the shaft 240 different from that obtained by the concatenated action of the individual transmission ratios of each free wheeL

In case ii) of the Table an operating condition of 100 rpm is assumed again for the input shaft 210, but the rpm of the shaft 240 are to be reduced. The rpm of the shaft 210 become again 80 rpm on the flange 214 and are transferred to the shaft 240 by means of the free wheel 230 which this time is set for a unitary transmission ratio. The shaft 240, which now rotates at 80 rpm, by means of the free wheel 230 set for a suitable non-unitary transmission ratio (1.25) transfers the 80 rpm of the shaft 240, transforming them into 100 rpm, to the flange 212, which returns 100 rpm to the input shaft 210, closing the kinematic loop.

It should be noted that in case ii) the free wheels 230, 231, have transmission ratios, respectively, of 1.25 and 1. An electronic control unit (not shown) operates both adjusting the eccentricity of the collar 208 with respect to the axis X2 so as to ensure, by means of the transmission ratio of the free wheel 230, the desired number of revolutions on the shaft 240, and at the same time adjusting the eccentricity of the collar 209 so as to adapt the transmission ratio of the free wheel 231 with respect to the flange 214 to a suitable value which closes the kinematic loop. In other words, the free wheel 230 raises the number of revolutions, reduced by R(F/in), to that desired on the output shaft 240, while the other free wheel 231 raises the number of output revolutions up to the number of input revolutions in order to compensate for the factor R(in/F).

The transmission 300 in Fig. 10 uses the same principle as the previous transmission and is based on a kinematic loop, but in this case the transmission ratio between input shaft 210 and output shaft 240 is increased with the use of four free wheels, two pairs arranged in cascade. For this variant, reference numbers identical to the previous ones are used to indicate functionally identical parts, these not being further described in that only the internal part of the transmission is different.

It is important to note that in this case the two toothed flanges 212, 214, coaxial with the shaft 240, are not movable, but are mounted rotatably on the shaft 240 by means of bearings 280, but in a fixed position.

The flanges 212, 214 also form, respectively, the internal component of two free wheels 290, 291 coupled by means of rollers 211 to two inner collars 270 and 271. Each collar 270, 271 is sufficiently wide to act as an external component, respectively, for another free wheel 292, 293 coupled with the output shaft 240. The constructional design of the individual free wheels 290, 291, 292, 293 is identical to that already described and will not be described again.

The two collars 270, 271 are rotatably mounted, respectively, on two outer collars 275, 276 by means of bearings 282. In this case also the operating logic is identical to that of the transmission 200. The rpm are reduced from the shaft 210 to the first free wheel 291 and are then multiplied by the following free wheels 293, 292, 290 and return to the shaft 210. The shaft 240 is trapped rotationally between the free wheels 291, 293 (which push it) and the wheels 292, 290 (which limit it). The kinematic loop is now: input shaft 210 - > free wheel 291 -> inner collar 271 -> free wheel 293 -> shaft 240 -> free wheel 292 -> inner collar 270 -> free wheel 290 -> shaft 210.

The transmission 300, however, has a novel feature compared to the transmission 200. The cascade arrangement of the two free wheels 290, 292 allows, as already seen, their transmission ratio to the shaft 240 to be multiplied Similarly, the two free wheels 291, 293 increase the number of revolutions of the shaft 240 transmitted to the shaft 210 with a greater transmission ratio, nevertheless ensuring the kinematic coherence of the kinematic loop.

The two sets of free wheels 290, 292 and 291, 293 are controlled independently by means of a device for performing axial displacement (such as, for example, that described below) of the two outer collars 275 with respect to the axis X2. An electronic control unit (not shown) operates adjusting both the eccentricity of the outer collar 275, so as to ensure the desired number of revolutions on the shaft 240, and at the same time the eccentricity of the outer collar 276, so as to adapt the transmission ratio to the flange 214 of the cascade of free wheels 291, 293 to a suitable value which closes the kinematic loop and ensures the kinematic coherence thereof.

The free wheels may be able only to increase the rpm, both if the movement is transmitted from their outer rotor to the inner rotor or vice versa. In the system with kinematic loop the rpm must be reduced by means of the gear wheels to the output shaft and then raised by gear wheels which thus close the loop. The minimum number of revolutions for the output shaft is defined by the coefficient R(F/in), which may be varied as required by changing the size of the gear wheels (or toothed flanges or belts or equivalent means). This is applicable clearly to both the variants. It is also evident that the wheels 204, 202 may be used indifferently, with different diameters, in order to transfer power to the shaft 240.

It should be noted that in the transmissions 200, 300 the output shaft 240 also forms a coupling rotor for coupling together two free wheels 290, 292 and 293, 291. This simplifies greatly the constructional design of the transmission. The transmission ratio between the shaft 210 and the shaft 240 may be varied as required, using an epicyclic train in series with the transmission. The invention, in fact, is very suitable - and this is a further advantage thereof - for being used in association with an epicyclic train (or reducer), in order to obtain a variation of the transmission ratio which may be more or less determined as required (between 0 rpm and n rpm, with the number n which can be defined during the design stage). For this variant, indicated by 400, see Fig. 12.

Using a principle similar to the previous one, an output shaft 440, with an axis X3, supported by bearings 411, via a free wheel 430 is coupled to a toothed flange 412 mounted rotatably by means of bearings 406 on an inner collar 450. This collar 450 is mounted in turn coaxially with the shaft 440 and in a manner movable perpendicularly with respect to the axis X3, so as to displace its axis eccentrically with respect to the latter. Only one free wheel has been shown for the sake of simplicity, but according to the invention any one of the variants described here may be associated with the epicyclic train.

The axial displacement of the collar 450 with respect to the axis X3 is obtained by means of a device, not shown (for example that described below) which keeps it however always meshed with a gearwheel 402 integral with an input shaft 410. This axial displacement causes an increase in the transmission ratio between the shaft 410 and the shaft 440 owing to the multiplying action of the free wheel 430, in a similar way to the previous cases.

The shaft 410 and the shaft 440 are connected to the input of a known epicyclic train 460 (shown schematically) which has an output shaft 462. Fig. 12 is therefore intended to illustrate the mechanical connections between a transmission according to the invention and an epicyclic train.

Fig. 13 shows a mechanical diagram of a transmission 500 which comprises a transmission 560 according to the invention and a known epicyclic train 570. In Fig. 13 the letter R indicates a transmission ratio. The transmission 500 is composed of an input shaft 510 integral with two gear wheels 512, 514, the second of which is the sun wheel of the epicyclic system 570. The wheel 512 engages with a gear wheel 562 integral with the input shaft 570 of the transmission 560, the output shaft 572 of which is integral with a gear wheel 564. The latter engages with a gear wheel 516 integrally joined by means of a sleeve 717 with another gear wheel 518 which engages with two identical planetary gear wheels 522 connected by a sleeve 523 to another two planetary gear wheels 526 which are identical to each other. The two planetary assemblies consisting of the wheels 52, 526 and the sleeve 523 transmit the movement to an output shaft 550.

Operation of the transmission 500 can be easily understood with reference again to the known principles of operation of an epicyclic system. Reference should also be made to the Table in Fig. 14 which shows some examples of operation and in which the following equivalences are used:
Rtx1 = transmission ratio of the transmission 560;
N(in), W(514) = rpm of the shaft 510 and the wheel 514;
NV(out) = rpm of the output shaft 550 of the transmission 560;
W(517) = rpm of the wheels 516 and 517;
W(523) = rpm of the wheels 522 and 526;
N(out) = rpm of the output shaft 550 of the epicyclic train 570.

It is important to note that, depending on the value of Rtx1, the rpm value of the output shaft 550 changes and may assume positive values or zero values irrespective of the rpm value of the input shaft 510. The motor to which the latter is connected may operate at a constant and optimum rpm, while the variations in rpm on the output shaft 550 are obtained by means of the variation of Rtx1 (in the ways already described). The transmission 560 may comprise, clearly, only one free wheel, as in Fig.12.

From the table in Fig. 14 it can be noted that question marks are shown in the third column for the value N(out). This is because a theoretical situation is illustrated: by applying a resistive torque to the output shaft 550 the rpm of the wheels 526 and 514 would become equal, the wheels 522 would transmit 500 rpm to the wheels 518 and 516, the latter transmitting 4000 rpm to the shaft 572. In this way the shaft 572 of the transmission 560 disengages from the input shaft 510 which assumes a speed of 2000 rpm. In short the transmission 560 functions as a simple idle free wheel.

In order to extend the rpm range which can be usefully reached by the shaft 550, varying its number of revolutions also in a range lying between a positive value and a negative value, it is possible to use a transmission such as that shown in Fig. 15, indicated there by 600. A second transmission 660 is added in parallel to the transmission 500, its input shaft being indicated by 670 while the output shaft is indicated by 672. The transmission 600 compared to the transmission 500 is modified only by the addition of a gear wheel 617 which is slightly smaller than the wheel 516 and integral with it (in Fig. 15 parts identical to those in Fig. 13 have the same reference number and again the letter R indicates a transmission ratio). The shaft 672 is connected to a gear wheel 673 which meshes with a gear wheel 680 integral with the shaft 510. The shaft 670 is connected to a gear wheel 674 which meshes with the gear wheel 617.

Let us now consider for the transmission 600 the operating condition of the transmission 500 described above with reference to the right-hand column in the Table of Fig. 14 where:
Rtx2 = transmission ratio of the transmission 660;
W(670) = rpm value of the wheel 674 and the shaft 670;
W(672) = rpm value of the wheel 673 and the shaft 672.

It can be noted that the action of the second transmission 660 is to brake the wheel 617, keeping it at 250 rpm. In fact any higher rpm condition would be opposed by the reaction on the shaft 672 induced by the coupling between the wheels 673, 680. Basically, the transmission 660 forms the closing element of a kinematic loop, in a similar manner to that already described. This loop is defined by the series: shaft 510 -> wheels 526 and 522 -> wheel 518 -> wheel 617 -> shaft 670 -> shaft 672 -> wheels 673 and 680 -> shaft 510. It should be noted that this solution allows both driving and braking of the shaft 550 to be controlled

In the transmission 600 rpm values different from those shown are obtained by varying the transmission ratios Rtx1 and Rtx2 of the two transmissions 560, 660. It will be the function, for example, of an electronic control unit (not shown) to control the individual free wheel stages of each transmission 560, 660 so as to obtain a desired transmission ratio in the individual transmission 560, 660 as well as determine and correlate at the same time the appropriate transmission ratio of the two transmissions 560, 660 so as to regulate the rpm of each component of the transmission 600 and obtain on the output shaft 550 the desired rpm condition. It is evident that one of the transmissions 500 and 660, or both of them, may also consist of a single free wheel, as shown in Fig.12.

Fig. 16 shows a device 700 for setting the transmission ratio in a transmission 800. The transmission 800 employs the same principle of the cascade arrangement of (two) free wheels described above and comprises an input shaft 810 and an output shaft 840 which are arranged coaxially along an axis X4 and rotatably supported respectively by bearings 812 and 842. The ends of the shafts 810 and 840 respectively transfer and receive the rotary movement via rollers 811 and an inner collar 815, all these parts forming together the cascade arrangement of two free wheels 830, 831. The inner collar 815 is contained inside an outer collar 817 mounted rotatably on the former by means of rollers 821. A casing 822 encloses and keeps in position all the above components and has at the top a sealed inlet duct 823 for a piston 824 integral with a hydraulic plunger 825. The piston 824 passes through the duct 823 and is connected to the outer collar 817 so as to be able to displace it perpendicularly with respect to the axis X4.

Also from that stated above it can be understood that the transmission ratios of the two free wheels 830, 831 are adjusted by means of the piston 824. In fact the piston, which is in turn controlled by an electronic control unit or equivalent means (not shown), may keep the collars 815, 817 coaxial with the axis X4 and determine a unitary transmission ratio between the shafts 810, 840 or cause the eccentricity of the collars 817, 817 with respect to the axis X4 and - based on the principles already described - increase this transmission ratio, which will be defined by the multiplication of the ratios provided individually by the two free wheels 830, 831.

It is important to note that the device 700 manages intrinsically to provide a control of the torque. In fact the pressure exerted by the piston 824 on the collar 817 opposes the pressure of the rollers 811 (and the rollers 821) generated by the reaction of the shaft 840. Assuming a constant power available on the input shaft 810 and a pressure on the collar 817 which is kept constant (by means of an electronic or mechanical control of the transmission 800) by the piston 824, the resisting torque on the output shaft 824 will determine the pressure which the latter exerts on the collar 817. If this resisting torque were to increase, it would overcome the (constant) pressure of the piston 824, which would retract and the eccentricity between the two collars 815, 817 and the axis X4 would thus be reduced Since this would result in a reduction in the transmission ratio, the speed of the shaft 840 would decrease, but the power available on it would not, increasing its torque. This intrinsic adjusting mechanism is a great advantage of the invention, since it prevents, for example, sudden stalling or overheating of the engine which drives the shaft 810. An example would be a tractor during ploughing which encounters a huge underground mass: a practically instantaneous resisting torque would stop the tractor and would stall the engine. The device 700 may also be used to vary the eccentricity of the free wheel in the transmission 400 or, more generally, to control the transmission ratio also of only one free wheel.

Fig. 17 shows test bench results of a transmission according to the invention, in which the waveforms acquired for a time interval of 40s are indicated as follows:
η = efficiency (abscissa values on right-hand side);
RPM-in = rpm of the input shaft (here, and below, abscissa values on left-hand side) = 100;
RPM-out = rpm of the output shaft;
C-in = average input torque = about 50 Nm;
C-out = average output torque (constant and about 30 Nm).

The transmission tested comprises two free wheels for raising the rpm. The set transmission ratio is 1:1.3. It can be seen that an increase in C-in produces precisely an increase in RPM-out and, in particular, the efficiency remains always greater than or equal to 0.9.

## Claims

1. Mechanical transmission (100; 200; 300; 500; 560; 600; 660; 800) with a variable transmission ratio between an input rotor (116; 210; 410; 570; 672; 810) and an output rotor (113; 240; 440; 572; 670; 840) coupled together by means of a coupling free wheel (116, 111, 115; 230; 290; 830) for transmission of the rotary movement, **characterized in that** it comprises between the input rotor and the output rotor one or more free wheels (111, 112, 113, 114, 115; 231; 291, 292, 293; 831) arranged in cascade with the coupling free wheel and able to transmit to one of the two rotors the rotary movement supplied from the coupling free wheel.

2. Transmission (100; 200; 300; 500; 560; 600; 660; 800) according to Claim 1, wherein the free wheels are coupled in pairs in a cascade arrangement via a common coupling rotor (112, 114, 115, 240; 240, 270, 271; 815), this forming simultaneously the driven rotating component of the free wheel upstream and the driving rotating component of the free wheel downstream.

3. Transmission (100; 200; 300; 500; 560; 600; 660; 800) according to Claim 2, wherein a free wheel comprises a pair of concentric annular members (112, 113, 114, 115, 116; 212, 214, 270, 271; 815, 817) between which contact bodies or rolling members are rotatably arranged, one (112, 114, 115; 212, 271; 817) of the two annular members transmitting in a single direction the rotary movement to the other one (112, 114, 115; 214; 270, 271; 817) via the contact bodies or the rolling members (111; 211; 811), the other annular member (112; 14, 115; 214; 270, 271; 817) acting as a coupling rotor.

4. Transmission (800) according to Claim 3, comprising means (700) for varying the relative eccentricity of the annular members (815) contained in one or more pairs of free wheels and thus modifying the transmission ratio of said free wheels.

5. Transmission (800) according to Claim 4, wherein the means (700) for varying the eccentricity comprise a piston (824) movable axially and able to vary the relative eccentricity of the annular members (815) contained in one or more pairs of said free wheels.

6. Transmission (800) according to Claim 5, wherein the piston (824) is coupled to a containing collar (817) inside which at least one pair of annular members (815) is rotatably arranged.

7. Transmission (100) according to any one of Claims 1 to 6, wherein the free wheels (111, 112, 114, 115) in the transmission are arranged so as to transmit the rotary movement of the input rotor (116) solely to the output rotor (113).

8. Transmission (200; 300) according to any one of Claims 2 to 6, wherein the free wheels (230; 231; 290, 291, 292, 293) in the transmission are arranged so as to transmit the rotary movement of the output rotor (240) to the input rotor (210), forming a kinematic loop between the input rotor (210) and the output rotor (240) able to oppose an rpm condition for the output rotor (240) different from that obtained by the concatenated action of the individual transmission ratios of each free wheel (230, 231; 290, 291, 292, 293).

9. Transmission (300) according to Claim 8, comprising two sets of free wheels (290, 291, 292, 293), one (290, 292) of which is able to transmit the rotary movement of the input rotor (210) to the output rotor (240) and one (291, 293) is able to transmit the rotary movement of the output rotor (240) to the input rotor (210), and also comprising control means for adapting the transmission ratio of the two sets of free wheels to values which ensure the kinematic coherence of the loop.

10. Transmission (200; 300; 400; 560; 600; 660) according to any one of the preceding claims, wherein the output rotor consists of a shaft (240) coaxial with all the free wheels.

11. Transmission (200; 300; 560; 600; 660) according to Claim 10, wherein the shaft (240) acts as a coupling rotor.

12. Transmission (100) according to any one of the preceding claims, wherein the input rotor (570) and/or the output rotor (572) comprise a gear wheel (113a, 116b) for the communication of the rotary movement from and towards the transmission.

13. Transmission (500) according to any one of the preceding claims, wherein the input rotor (570) and the output rotor (572) are coupled to an epicyclic train (570), the output shaft (550) of which provides the rotary movement output from the transmission.

14. Mechanical transmission (600) comprising an assembly (500) with the characteristic features of Claim 13, in which:
- the input rotor (570) of the assembly is coupled to the output rotor (672) of a second transmission (660) with the characteristic features of any one of Claims 1 to 12, and
- the output rotor (572) of the assembly (600) is coupled to the input rotor (670) of the second transmission (660) so that the coupling of the input rotors (570, 670) and output rotors (572, 672) of the assembly (500) and the second transmission (660) forms a kinematic loop able to stabilize the condition of the output shaft (550) of the epicyclic train (570).

15. Mechanical transmission (560; 600) according to Claim 13 or 14, wherein the coupling between the epicyclic train (570) and a said input rotor (570, 670) and/or a said output rotor (572, 672) is achieved by means of gear wheels of varying diameter (512, 516, 562, 564, 617, 673, 674, 680).
